# EUROPEAN PATENT APPLICATION

(11) **EP 3 757 434 A1**
(43) Date of publication of application: **30.12.2020**
(21) Application number: 18907095.6
(22) Date of filing: 23.02.2018
(51) Int. Cl.: F16K 11/074, F25B 13/00, F25B 41/04

(54) **FLOW PATH SWITCHING VALVE AND AIR CONDITIONER**

(71) Applicant: Mitsubishi Electric Corporation, Tokyo 100-8310 (JP)
(72) Inventor: TANAKA, Chitose, Tokyo 100-8310 (JP)
(74) Representative: Pfenning, Meinig & Partner mbB
(86) International application number: PCT/JP2018/006700
(87) International publication number: WO 2019/163090

(57) **Abstract**

Provided is a flow path switching valve which is capable of switching the number of flow paths in a refrigerant circuit and may be made smaller than a conventional flow path switching valve, and an air conditioner including the flow path switching valve. The flow path switching valve (100) includes a valve seat (50) which is provided with a valve chamber (51) and first to fourth openings (PI to P4) in communication with the valve chamber (51), and a valve body (60) which is provided so as to be movable between a first position and a second position in the valve chamber (51). When the valve body (60) is located at the first position, a first flow path which connects the first opening (P1) to the second opening (P2) and a second flow path which connects the third opening (P3) to the fourth opening (P4) and is partitioned from the first flow path are formed in the valve chamber (51). When the valve body (60) is located at the second position, a third flow path which connects the second opening (P2) to the third opening (P3) and is partitioned from the first opening (P1) and the fourth opening (P4) is formed in the valve chamber (51), and the first opening (P1) and the fourth opening (P4) are shielded from each other.

## Description

### TECHNICAL FIELD

The present invention relates to a flow path switching valve and an air conditioner including the flow path switching valve.

### BACKGROUND ART

Conventionally, a four-way valve, a six-way valve or the like is used as a flow path switching valve. Such a flow path switching valve includes a valve seat and a valve body, and is configured to switch the flow path by changing the position of the valve body relative to the valve seat.

In the conventional flow path switching valve, the number of flow paths does not change before and after the switching operation. For example, a conventional four-way valve which connects a flow path A, a flow path B, a flow path C and a flow path D may be switched between a state where the flow path A is connected to the flow path B and the flow path C is connected to the flow path D and a state where the flow path A is connected to the flow path D and the flow path B is connected to the flow path C.

Japanese Patent Laying-Open No. 2000-274879 discloses an air conditioner which is provided with a flow path switching valve including a pair of four-way valves and a stop valve, and configured to switch the number of flow paths in a refrigerant circuit by using the flow path switching valve.

### CITATION LIST

### PATENT LITERATURE

PTL 1: Japanese Patent Laying-Open No. 2000-274879

### SUMMARY OF INVENTION

### TECHNICAL PROBLEM

As described above, in the flow path switching valve including a pair of four-way valves and a stop valve, a space is needed to dispose each of the four-way valves and the stop valve and a space is needed to dispose a driving unit that drives each of the four-way valves and the stop valve, which makes it difficult to make the flow path switching valve smaller.

It is a main object of the present invention to provide a flow path switching valve which is capable of switching the number of flow paths in a refrigerant circuit and may be made smaller than a conventional flow path switching valve, and an air conditioner including the flow path switching valve.

### SOLUTION TO PROBLEM

The flow path switching valve according to the present invention includes a valve seat which is provided with a valve chamber, and a first opening, a second opening, a third opening and a fourth opening, each of which is in communication with the valve chamber; and a valve body which is provided so as to be movable between a first position and a second position in the valve chamber. When the valve body is located at the first position, a first flow path which connects the first opening to the second opening and a second flow path which connects the third opening to the fourth opening and is partitioned from the first flow path are formed in the valve chamber. When the valve body is located at the second position, a third flow path which connects the second opening to the third opening and is partitioned from the first opening and the fourth opening is formed in the valve chamber, and the first opening and the fourth opening are shielded from each other.

### ADVANTAGEOUS EFFECTS OF INVENTION

The flow path switching valve according to the present invention may be switched between a first state where the first flow path which connects the first opening to the second opening and the second flow path which connects the third opening to the fourth opening and is partitioned from the first flow path are formed in the valve chamber, and a second state where the third flow path which connects the second opening to the third opening is formed in the valve chamber, and the first opening and the fourth opening are shielded from each other. As a result, it is possible for the flow path switching valve to switch the number of flow paths in the refrigerant circuit without a stop valve, and it is possible to make the flow path switching valve smaller than a conventional flow path switching valve.

### BRIEF DESCRIPTION OF DRAWINGS

Fig. 1 is an exploded perspective view illustrating the configuration of a flow path switching valve according to a first embodiment of the present invention;
Fig. 2 is a cross-sectional view illustrating a first state of the flow path switching valve illustrated in Fig. 1;
Fig. 3 is a cross-sectional view illustrating a second state of the flow path switching valve illustrated in Fig. 1;
Fig. 4 is a block diagram illustrating the configuration of an air conditioner according to the first embodiment of the present invention;
Fig. 5 is a view illustrating a refrigerant flow path in the first state of the air conditioner illustrated in Fig. 4;
Fig. 6 is a view illustrating a refrigerant flow path in the second state of the air conditioner illustrated in Fig. 4;
Fig. 7 is a perspective view illustrating the configuration of a flow path switching valve according to a second embodiment;
Fig. 8 is a cross-sectional view illustrating a first state of the flow path switching valve illustrated in Fig. 7;
Fig. 9 is a cross-sectional view illustrating a second state of the flow path switching valve illustrated in Fig. 7;
Fig. 10 is a cross-sectional view illustrating a modification of the flow path switching valve according to the second embodiment;
Fig. 11 is a top view illustrating a first state of the flow path switching valve according to a third embodiment;
Fig. 12 is a top view illustrating a second state of the flow path switching valve according to the third embodiment;
Fig. 13 is a perspective view illustrating a valve body of the flow path switching valve illustrated in Figs. 11 and 12;
Fig. 14 is a cross-sectional view illustrating a first state of a modification of the flow path switching valve according to the first embodiment; and
Fig. 15 is a cross-sectional view illustrating a second state of a modification of the flow path switching valve according to the first embodiment.

### DESCRIPTION OF EMBODIMENTS

Hereinafter, embodiments of the present invention will be described in detail with reference to the drawings. In the drawings, the same or corresponding portions are denoted by the same reference numerals, and generally the description thereof will not be repeated.

### First Embodiment

### <Configuration of Flow Path Switching Valve>

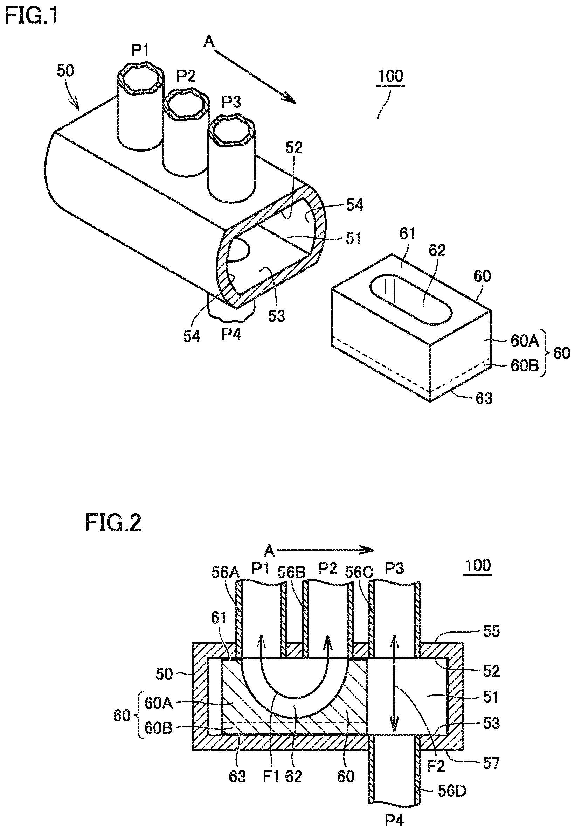

As illustrated in Figs. 1 to 3, a flow path switching valve 100 according to the first embodiment includes a valve seat 50 and a valve body 60. The valve seat 50 includes a valve chamber 51, and a first opening P1, a second opening P2, a third opening P3 and a fourth opening P4, each of which is in communication with the valve chamber 51. The valve body 60 is movable in the valve chamber 51. The flow path switching valve 100 may be switched between a first state where the valve body 60 is located at a first position inside the valve chamber 51 and a second state where the valve body 60 is located at a second position inside the valve chamber 51.

As illustrated in Fig. 2, when the valve body 60 is located at the first position, a first flow path F1 which connects the first opening P1 to the second opening P2 and a second flow path F2 which connects the third opening P3 to the fourth opening P4 and is partitioned from the first flow path F1 are formed in the valve chamber 51.

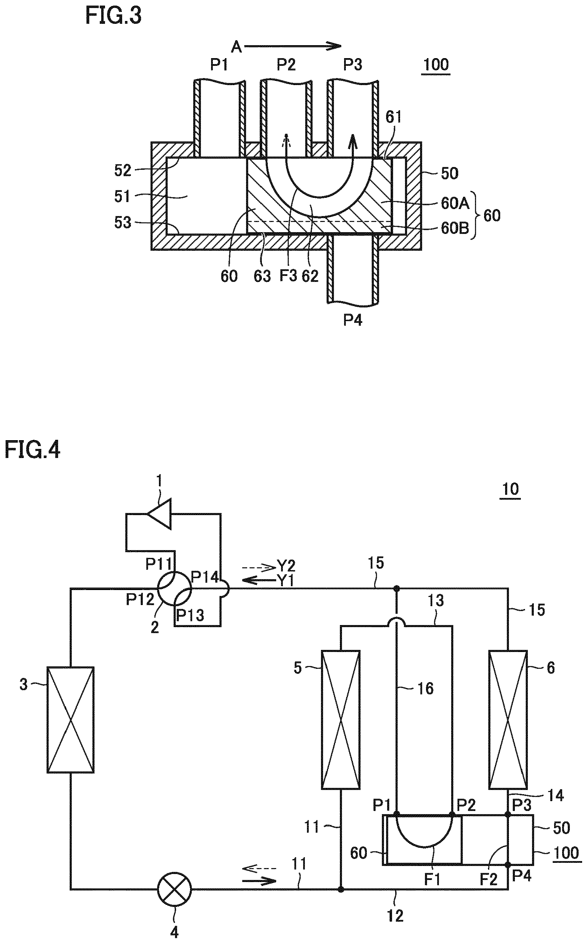

As illustrated in Fig. 3, when the valve body 60 is located at the second position, a third flow path F3 which connects the second opening P2 to the third opening P3 and is partitioned from the first opening P1 and the fourth opening P4 is formed in the valve chamber, and the first opening P1 and the fourth opening P4 are shielded from each other.

As illustrated in Figs. 2 and 3, when the valve body 60 is located at the first position, the valve body 60 partitions the first flow path F1 from the second flow path F2. Further, when the valve body 60 is located at the second position, the valve body 60 closes the first opening P1 and the fourth opening P4, and partitions the third flow path F3 from a refrigerant flow path between the first opening P1 and the fourth opening P4. In the present disclosure, the term of "partition" means to prevent fluids in two flow paths from being mixed.

Hereinafter, the configuration of the flow path switching valve 100 will be described in more detail. As illustrated in Figs. 1 to 3, the valve chamber 51 has a first surface 52 on which one end of the first opening P1, one end of the second opening P2 and one end of the third opening P3 are formed, a third surface 53 on which one end of the fourth opening P4 is formed, and side surfaces 54 which connect the first surface 52 and the third surface 53 at both sides. The first surface 52 is disposed to face the third surface 53. The valve chamber 51 is surrounded by the first surface 52, the third surface 53 and the side surfaces 54, and has a substantially cubic shape. The side surface 54 is curved toward the outside of the valve chamber 51.

A first pipe 56A, a second pipe 56B and a third pipe 56C are disposed in line on an outer surface 55 of the valve chamber 51 opposed to the first surface 52, and connected to the valve seat 50. The openings of the first pipe 56A, the second pipe 56B and the third pipe 56C at the end connected to the valve seat 50 form the first opening P1, the second opening P2 and the third opening P3, respectively. A fourth pipe 56D is connected to an outer surface 57 of the valve chamber 51 opposed to the third surface 53. The opening of the fourth pipe 56D at the end connected to the valve seat 50 forms the fourth opening P4. The third opening P3 and the fourth opening P4 face each other in the valve chamber 51.

One end of the first opening P1, one end of the second opening P2 and one end of the third opening P3 are disposed in order in a first direction A, for example. For convenience of description, hereinafter, the side closer to the first opening P1 than the second opening P2 in the first direction A is referred to as a first side, and the side closer to the third opening P3 than the second opening P2 in the first direction A is referred to as a second side. In the first direction A, the distance between one end of the first opening P1 and one end of the second opening P2 is equal to the distance between one end of the second opening P2 and one end of the third opening P3, for example. One end of the third opening P3 is disposed to face one end of the fourth opening P4 with the valve chamber 51 interposed therebetween, for example. The center line of the third opening P3, for example, is aligned with the center line of the fourth opening P4. The first surface 52 and the third surface 53 may be curved surfaces, but in the present embodiment they are, for example, flat surfaces. The opening area of the first opening P1, the opening area of the second opening P2, the opening area of the third opening P3 and the opening area of the fourth opening P4 are equal to each other, for example.

The valve body 60 has a cubic shape. When the valve body 60 is located in the valve chamber 51, the first surface 52 of the valve chamber 51 faces a second surface 61 of the valve body 60, and the third surface 53 of the valve chamber 51 faces a fourth surface 63 of the valve body 60.

As illustrated in Figs. 2 and 3, the valve body 60 is movable in the first direction A. In other words, the moving direction of the valve body 60 is the same as the direction where one end of the first opening P1, one end of the second opening P2 and one end of the third opening P3 are arranged. The valve body 60 is provided so as to be slidable inside the valve seat 50. The second surface 61 and the fourth surface 63 of the valve body 60 serve as sliding surfaces relative to the valve seat 50. The second surface 61 of the valve body 60 is slidable against the first surface 52 of the valve seat 50. The fourth surface 63 of the valve body 60 is disposed on the side opposed to the second surface 61, and is slidable against the third surface 53 of the valve seat 50.

The valve body 60 is provided with a recess 62 that is recessed from the second surface 61. The second surface 61 is provided so as to surround the recess 62. In the first state and in the second state, the second surface 61 contacts the first surface 52, and the fourth surface 63 contacts the third surface 53. Thus, the valve body 60 is positioned relative to the valve seat 50 at least in a direction perpendicular to the second surface 61 and the fourth surface 63.

The recess 62 is configured to connect two adjacent openings of the first opening P1, the second opening P2 and the third opening P3 in the first direction A. The recess 62 is not configured to connect three adjacent openings of the first opening P1, the second opening P2 and the third opening P3 in the first direction A at the same time.

The recess 62 is provided to face the first opening P1 and the second opening P2 in the first state, and connects the first opening P1 to the second opening P2. The recess 62 is provided to face the second opening P2 and the third opening P3 in the second state, and connects the first opening P1 to the second opening P2. In other words, the recess 62 forms the first flow path F1 in the first state, and forms the third flow path F3 in the second state.

The recess 62 is provided so as not to penetrate the valve body 60. The recess 62 only opens on the second surface 61, and does not open on the other surfaces including the fourth surface 63. A portion (bottom) of the recess 62 which is most distant from the second surface 61 is spaced from the fourth surface 63. The recess 62, for example, is formed to have a semicircular shape in the cross section along the first direction A.

The width of the recess 62 in the first direction A is, for example, less than the distance between the end of the first opening P1 on the first side and the end of the third opening P3 on the second side, and is, for example, equal to the distance between the end of the first opening P1 on the first side and the end of the second opening P2 on the second side. The width of the recess 62 in the direction perpendicular to the first direction A is, for example, equal to or greater than the width of the first opening P1, the second opening P2, and the third opening P3 in the direction perpendicular to the first direction A. The contact portion between the second surface 61 and the first surface 52 and the contact portion between the fourth surface 63 and the third surface 53 in the first state or the second state partition the first flow path F1 or the third flow path F3 formed in the recess 62 between two openings from a refrigerant flow path formed between the other two openings.

As illustrated in Fig. 2, when the valve body 60 is located at the first position, the end of the valve body 60 on the first side is located closer to the first side than the end of the first opening P1 on the first side, and the end of the valve body 60 on the second side is located between the end of the second opening P2 on the second side and the end of the third opening P3 on the first side. When the flow path switching valve 100 is being switched to the first state, the valve body 60 is held at the first position. Thus, in the first state, the first flow path F1 which connects the first opening P1 to the second opening P2 is formed in the recess 62, and the second flow path F2 which connects the third opening P3 to the fourth opening P4 is formed in the valve chamber 51 but outside the valve body 60.

As illustrated in Fig. 3, when the valve body 60 is located at the second position, the end of the valve body 60 on the first side is located between the end of the first opening P1 on the second side and the end of the second opening P2 on the first side, and the end of the valve body 60 on the second side is located closer to the second side than the end of the third opening P3 on the second side. When the flow path switching valve 100 is being switched to the second state, the valve body 60 is held at the second position. Thus, in the second state, only the third flow path F3 which connects the second opening P2 to the third opening P3 is formed in the recess 62. A space formed between the end of the valve body 60 on the first side and the inner peripheral end of the valve chamber 51 on the first side is connected to the first opening P1 only and is partitioned from the fourth opening P4. Thus, in the second state, no flow path is formed in the valve chamber 51 between the first opening P1 and the fourth opening P4, and thereby, the first opening P1 and the fourth opening P4 are shielded from each other.

From a different point of view, the valve body 60 includes a partition portion 60A having the second surface 61 and an opening of the recess 62, and a shield portion 60B formed integral with the partition portion 60A and having the fourth surface 63. The partition portion 60A and the shield portion 60B are arranged side by side in a direction perpendicular to the second surface 61 and the fourth surface 63. When the valve body 60 is located at the first position or the second position, the entire second surface 61 of the partition portion 60A contacts the first surface 52 of the valve seat 50, whereby partitions the first flow path F1 or the third flow path F3 formed in the recess 62 from a space formed outside the valve body 60. When the valve body 60 is located at the first position, the entire fourth surface 63 of the shield portion 60B contacts the third surface 53, and the shield portion 60B does not block the second flow path F2 which connects the third opening P3 to the fourth opening P4. When the valve body 60 is located at the second position, a part of the fourth surface 63 of the shield portion 60B blocks the fourth opening P4, and the other part of the fourth surface 63 around that part is in contact with the third surface 53. Thus, the shield portion 60B shields the first opening P1 from the fourth opening P4.

The second surface 61 and the fourth surface 63 of the valve body 60 each has, for example, a long side and a short side. The long side extends along the first direction A, and the short side extends along a direction perpendicular to the first direction A.

In the first state, a space may be formed, for example, between the end of the valve body 60 on the first side and the inner peripheral end of the valve chamber 51 on the first side. The space may be partitioned from the first flow path F1 by a contact portion between the second surface 61 and the first surface 52 and a contact portion between the fourth surface 63 and the third surface 53. In the second state, a space may be formed, for example, between the end of the valve body 60 on the second side and the inner peripheral end of the valve chamber 51 on the second side. The space may be partitioned from the third flow path F3, the first opening P1 and the fourth opening P4 by the contact portion between the second surface 61 and the first surface 52 and the contact portion between the fourth surface 63 and the third surface 53.

The valve body 60 may be moved between the first position and the second position by a driving unit (not shown). The driving unit may have any configuration, and it may be a so-called differential pressure driving unit or an electromagnetic driving unit.

### <Configuration of Air Conditioner>

As illustrated in Fig. 4, an air conditioner 10 according to the first embodiment is provided with a refrigerant circuit which includes a compressor 1, a four-way valve 2, an outdoor heat exchanger 3, an expander 4, a first indoor heat exchanger 5, a second indoor heat exchanger 6, and a flow path switching valve 100. The refrigerant circuit circulates refrigerant in a forward direction Y1 to flow through the compressor 1, the outdoor heat exchanger 3, the expander 4 and the first indoor heat exchanger 5 in order and return to the compressor 1, or in a backward direction Y2 to flow through the compressor 1, the first indoor heat exchanger 5, the expander 4 and the outdoor heat exchanger 3 in order and return to the compressor 1. In other words, by switching the four-way valve 2, the air conditioner 10 may be switched between a cooling operation and a heating operation.

Further, by switching the flow path switching valve 100, the air conditioner 10 may be switched between a state where the first indoor heat exchanger 5 and the second indoor heat exchanger 6 are connected in series in the refrigerant circuit and a state where the first indoor heat exchanger 5 and the second indoor heat exchanger 6 are connected in parallel in the refrigerant circuit.

As illustrated in Fig. 4, the refrigerant circuit includes a first inlet/outlet pipe 11 connected to one end of the first indoor heat exchanger 5, a second inlet/outlet pipe 12 which connects the first inlet/outlet pipe 11 to the fourth opening P4 of the flow path switching valve 100, a third inlet/outlet pipe 13 which connects the other end of the first indoor heat exchanger 5 to the second opening P2 of the flow path switching valve 100, a fourth inlet/outlet pipe 14 which connects the third opening P3 of the flow path switching valve 100 to one end of the second indoor heat exchanger 6, a fifth inlet/outlet pipe 15 which is connected to the other end of the second indoor heat exchanger 6, and a sixth inlet/outlet pipe 16 which connects the first opening P1 of the flow path switching valve 100 to the fifth inlet/outlet pipe 15.

As illustrated in Fig. 4, the first outflow pipe 11 is connected to the expander 4. The fifth outflow pipe 15 is connected to a fourth port P14 of the four-way valve 2.

The four-way valve 2 is provided with a first port P11, a second port P12, a third port P13, and a fourth port P14, and may be switched between a state where a flow path is formed between the first port P11 and the second port P12 and a flow path is formed between the third port P13 and the fourth port P14 and a state where a flow path is formed between the first port P11 and the fourth port P14 and a flow path is formed between the second port P12 and the third port P13.

As illustrated in Fig. 4, the first port P11 of the four-way valve 2 is connected to an outlet port of the compressor 1. The second port P12 of the four-way valve 2 is connected to the outdoor heat exchanger 3. The third port P13 of the four-way valve 2 is connected to an inlet port of the compressor 1. The fourth port P14 of the four-way valve 2 is connected to the second indoor heat exchanger 6 via the fifth inlet/outlet pipe 15, and is connected to the first opening P1 of the flow path switching valve 100 via the fifth inlet/outlet pipe 15 and the sixth inlet/outlet pipe 16.

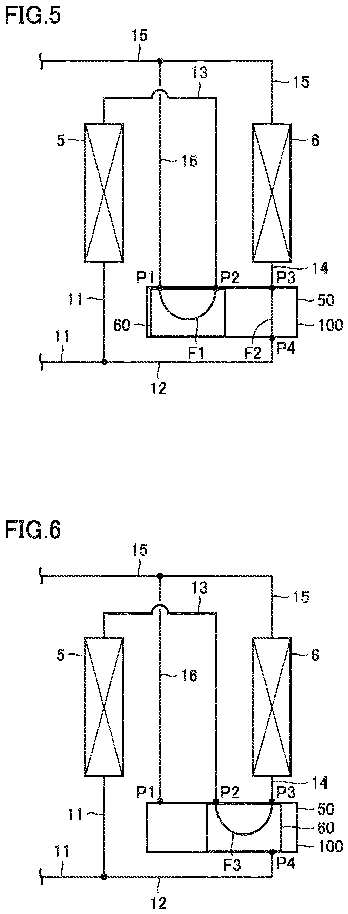

As illustrated in Figs. 4 and 5, when the flow path switching valve 100 is switched to the first state, the first indoor heat exchanger 5 and the second indoor heat exchanger 6 are connected in parallel to each other. For example, when the refrigerant is circulated in the forward direction Y1, a part of the refrigerant passed through the compressor 1, the outdoor heat exchanger 3 and the expander 4 in order flows through the first inlet/outlet pipe 11, the first indoor heat exchanger 5, the third inlet/outlet pipe 13, the first flow path F1 in the flow path switching valve 100 and the sixth inlet/outlet pipe 16 into the fifth inlet/outlet pipe 15. The remainder of the refrigerant passed through the compressor 1, the outdoor heat exchanger 3 and the expander 4 in order flows into the fifth inlet/outlet pipe 15 through the second inlet/outlet pipe 12, the second flow path F2 in the flow path switching valve 100, the fourth inlet/outlet pipe 14, and the second indoor heat exchanger 6. The refrigerant flowed into the fifth inlet/outlet pipe 15 is sucked into the compressor 1 through the fourth port P14 and the third port P13 of the four-way valve 2.

On the other hand, for example, when refrigerant is circulated in the backward direction Y2, a part of the refrigerant discharged from the compressor 1 flows through the fifth inlet/outlet pipe 15, the sixth inlet/outlet pipe 16, the first flow path F1 in the flow path switching valve 100, the third inlet/outlet pipe 13, the first indoor heat exchanger 5, the first inlet/outlet pipe 11, the expander 4 and the outdoor heat exchanger 3, and is sucked into the compressor 1. The remainder of the refrigerant discharged from the compressor 1 flows through the fifth inlet/outlet pipe 15, the second indoor heat exchanger 6, the fourth inlet/outlet pipe 14, the second flow path F2 in the flow path switching valve 100, the second inlet/outlet pipe 12, the first inlet/outlet pipe 11, the expander 4 and the outdoor heat exchanger 3, and is sucked into the compressor 1.

As illustrated in Figs. 4 and 6, when the flow path switching valve 100 is switched to the second state, the first indoor heat exchanger 5 and the second indoor heat exchanger 6 are connected in series with each other. For example, when the refrigerant is circulated in the forward direction Y1, the refrigerant passed through the compressor 1, the outdoor heat exchanger 3 and the expander 4 in order flows through the first inlet/outlet pipe 11, the first indoor heat exchanger 5, the third inlet/outlet pipe 13, the third flow path F3 in the flow path switching valve 100, the fourth inlet/outlet pipe 14, and the second indoor heat exchanger 6 into the fifth inlet/outlet pipe 15. In this case, the first opening P1 and the fourth opening P4 of the flow path switching valve 100 are shielded from each other, and the third flow path F3 is partitioned from the first opening P1 and the fourth opening P4. Therefore, all the refrigerant passed through the first indoor heat exchanger 5 flows through the second indoor heat exchanger 6.

On the other hand, for example, when refrigerant is circulated in the backward direction Y2, all the refrigerant discharged from the compressor 1 flows through the fifth inlet/outlet pipe 15, the second indoor heat exchanger 6, the fourth inlet/outlet pipe 14, the third flow path F3 in the flow path switching valve 100, the third inlet/outlet pipe 13, the first indoor heat exchanger 5, the first inlet/outlet pipe 11, the expander 4 and the outdoor heat exchanger 3, and is sucked into the compressor 1. Also in this case, the first opening P1 and the fourth opening P4 of the flow path switching valve 100 are shielded from each other, and the third flow path F3 is partitioned from the first opening P1 and the fourth opening P4. Therefore, all the refrigerant passed through the second indoor heat exchanger 6 flows into the first indoor heat exchanger 5.

Preferably, the flow path switching valve 100 is switched to the first state during the cooling operation in which both the first indoor heat exchanger 5 and the second indoor heat exchanger 6 work as an evaporator, and is switched to the second state during the heating operation in which both the first indoor heat exchanger 5 and the second indoor heat exchanger 6 work as a condenser.

### <Effects>

The flow path switching valve 100 according to the first embodiment includes a valve seat 50 which is provided with a valve chamber 51, and a first opening P1, a second opening P2, a third opening P3 and a fourth opening P4, each of which is in communication with the valve chamber 51; and a valve body 60 which is provided so as to be movable between a first position and a second position in the valve chamber 51. When the valve body 60 is located at the first position, a first flow path F1 which connects the first opening P1 to the second opening P2 and a second flow path F2 which connects the third opening P3 to the fourth opening P4 and is partitioned from the first flow path F1 are formed in the valve chamber 51. When the valve body 60 is located at the second position, a third flow path P3 which connects the second opening P2 to the third opening P3 and is partitioned from the first opening P1 and the fourth opening P4 is formed in the valve chamber 51, and the first opening P1 and the fourth opening P4 are shielded from each other.

According to the present embodiment, by switching the flow path switching valve 100 between the first state and the second state, it is possible to form different flow paths and increase or decrease the number of flow paths. In other words, since the flow path switching valve 100 can block one flow path in the second state without using a stop valve, it is possible to reduce the manufacturing cost as compared with the conventional air conditioner which is configured to switch the flow paths in the refrigerant circuit and increase or decrease the number of flow paths by using a pair of four-way valves and a stop valve as described above.

In general, as the opening area (the diameter) of a stop valve becomes larger, the stop valve will become more expensive. Therefore, in the conventional air conditioner described above, for the purpose of reducing the manufacturing cost, it is considered to use a stop valve that has an opening area smaller than that of the four-way valve, which may deteriorate the performance of the air conditioner due to the pressure loss of the refrigerant after flowing through the stop valve.

However, since no stop valve is disposed in the flow path switching valve 100, the pressure loss caused by the stop valve is not present. Further, in the flow path switching valve 100, unlike the stop valve, each opening may be easily increased in diameter without increasing the manufacturing cost. Therefore, as compared with the configuration of a pair of four-way valves and a stop valve as described above, it is possible to reduce the manufacturing cost of the flow path switching valve 100 and suppress deterioration in the performance of the air conditioner 10 due to the pressure loss in the flow path switching valve 100.

When the flow path switching valve 100 is switched to the first state, the valve body 60 partitions the first flow path F1 from the second flow path F2; and when the flow path switching valve 100 is switched to the second state, the valve body 60 closes the first opening P1, and partitions the third flow path F3 from the first opening P1 and the fourth opening P4.

The flow path switching valve 100 may be switched between the first state and the second state simply by changing the position of the valve body 60 relative to the valve seat 50. In other words, the valve body 60 functions not only as a valve body of a four-way valve but also as a valve body of a stop valve. Therefore, as compared with the configuration of a pair of four-way valves and a stop valve in the conventional air conditioner described above, the flow path switching valve 100 may be switched easily and quickly so as to minimize a time lag between the formation of different flow paths and the increase or decrease in the number of flow paths. In other words, the flow path switching valve 100 may be used to form different flow paths and increase or decrease the number of flow paths at substantially the same time.

In the flow path switching valve 100, the valve chamber 51 has a first surface 52 which is formed with one end of the first opening P1, one end of the second opening P2 and one end of the third opening P3, and a third surface 53 which faces the first surface 52 and is formed with one end of the fourth opening P4. The valve body 60 has a second surface 61 which is slidable against the first surface 52, a recess 62 that is recessed from the second surface 61, and a fourth surface 63 which is slidable against the third surface 53. The first flow path F1 in the first state and the third flow path F3 in the second state are formed in the recess 62, and the fourth opening P4 in the second state is closed by the fourth surface 63.

In the flow path switching valve 100, the valve body 60 may be slid in the valve chamber 51, whereby is movable between the first position and the second position. Therefore, the driving unit for driving the valve body 60 may be provided so as to apply a driving force to the valve body 60 only in the extending direction of the second surface 61 and the fourth surface 63. Therefore, the valve body 60 of the flow path switching valve 100 may be driven by, for example, a driving unit which has the same configuration as that of a driving unit for a conventional four-way valve. Further, the second surface 61 and the fourth surface 63 of the valve body 60 slide respectively against the first surface 52 and the third surface 53 of the valve seat 50 facing each other, whereby the valve body 60 is positioned relative to the valve seat 50 in a direction perpendicular to the second surface 61. In other words, the valve seat 50 also functions as a holding member that holds the first surface 52 of the valve seat 50 and the second surface 61 of the valve body 60 in contact with each other. Therefore, there is no need for the flow path switching valve 100 to include a holding member that is required to hold the first surface 52 of the valve seat 50 and the second surface 61 of the valve body 60 in contact with each other when, for example, only the first surface 52 of the valve seat 50 slides against the second surface 61 of the valve body 60. As a result, as compared with the case where the holding member is required, it is more reliable for the flow path switching valve 100 to prevent the refrigerant from flowing into and out of a flow path to be partitioned while reducing the number of parts.

In the flow path switching valve 100, the first opening P1, the second opening P2 and the third opening P3 are disposed in order in the first direction. Therefore, the flow path switching valve 100 may be switched between the first state and the second state simply by moving the valve body 60 in the first direction A.

In the flow path switching valve 100, the fourth opening P4 is disposed to face the third opening P3. The center line of the fourth opening P4 is aligned with the center line of the third opening P3.

As compared with the case where the center line of the fourth opening P4 is not aligned with the center line of the third opening P3, it is possible for the flow path switching valve 100 to reduce the pressure loss in the second flow path F2 which connects the third opening P3 to the fourth opening P4 in the first state. Further, as compared with a flow path switching valve 101 (to be described later) in which the first opening P1, the second opening P2, the third opening P3 and the fourth opening P4 are disposed in order in the first direction, the flow path switching valve 100 may be made smaller in the first direction A.

The air conditioner 10 is provided with a refrigerant circuit that includes the flow path switching valve 100, the first indoor heat exchanger 5, and the second indoor heat exchanger 6. The refrigerant circuit includes a first inlet/outlet pipe 11 which is connected to one end of the first indoor heat exchanger 5, a second inlet/outlet pipe 12 which connects the first inlet/outlet pipe 11 to the fourth opening P4 of the flow path switching valve 100, a third inlet/outlet pipe 13 which connects the other end of the first indoor heat exchanger 5 to the second opening P2 of the flow path switching valve 100, a fourth inlet/outlet pipe 14 which connects the third opening P3 of the flow path switching valve 100 to one end of the second indoor heat exchanger 6, a fifth inlet/outlet pipe 15 which is connected to the other end of the second indoor heat exchanger 6, and a sixth inlet/outlet pipe 16 which connects the fifth inlet/outlet pipe 15 to the first opening P1 of the flow path switching valve 100. In the first state, the first indoor heat exchanger 5 and the second indoor heat exchanger 6 are connected in parallel. In the second state, the first indoor heat exchanger 5 and the second indoor heat exchanger 6 are connected in parallel.

The air conditioner 10 may be switched between the first state where the first indoor heat exchanger 5 and the second indoor heat exchanger 6 are connected in parallel and the second state where the first indoor heat exchanger 5 and the second indoor heat exchanger 6 are connected in series by using the flow path switching valve 100. Therefore, as compared with a conventional air conditioner in which such a switching operation is performed by a pair of four-way valves and a stop valve, it is possible to reduce the manufacturing cost of the air conditioner 10 and inhibit the deterioration in performance thereof.

In the air conditioner 10, the flow path switching valve 100 is switched to the first state when the first indoor heat exchanger 5 and the second indoor heat exchanger 6 work as an evaporator, and the flow path switching valve 100 is switched to the second state when the first indoor heat exchanger 5 and the second indoor heat exchanger 6 work as a condenser.

### Second Embodiment

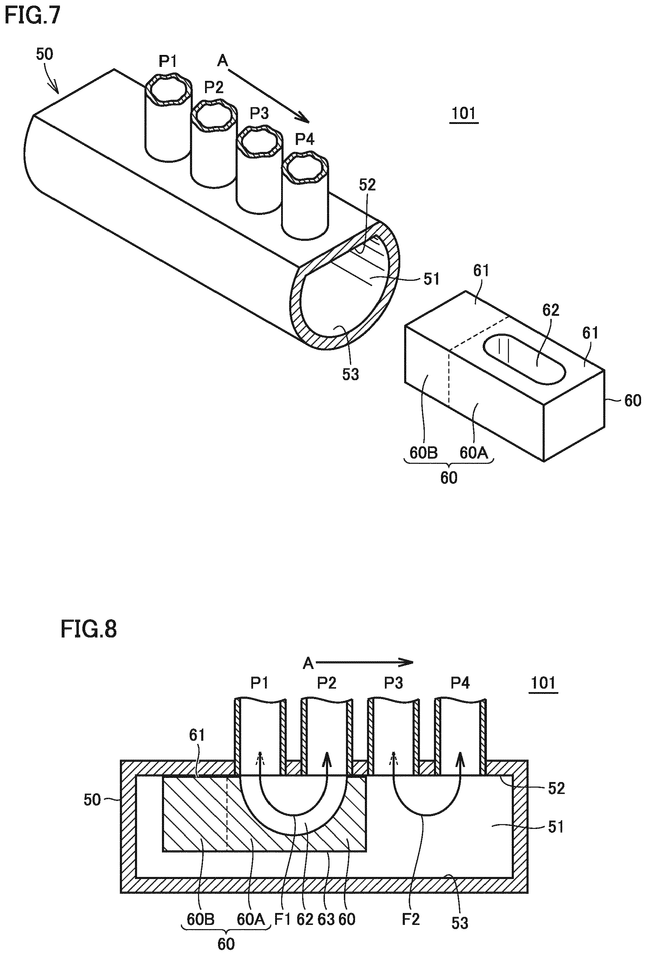

As illustrated in Figs. 7 to 9, the flow path switching valve 101 according to the second embodiment has basically the same configuration as the flow path switching valve 100 according to the first embodiment, except that when the valve body 60 is moved between the first position and the second position, the valve seat 50 and the valve body 60 slide against each other only on one surface.

As illustrated in Figs. 7 to 9, in the flow path switching valve 101, when the valve body 60 is moved between the first position and the second position, the first surface 52 of the valve seat 50 and the second surface 61 of the valve body 60 are slidable against each other. In the flow path switching valve 101, when the valve body 60 is moved between the first position and the second position, the third surface 53 of the valve seat 50 and the fourth surface 63 of the valve body 60 do not slide against each other.

The first opening P1, the second opening P2, the third opening P3, and the fourth opening P4 are disposed in order in the first direction A. The fourth opening P4 is located closer to the second side in the first direction A than the third opening P3.

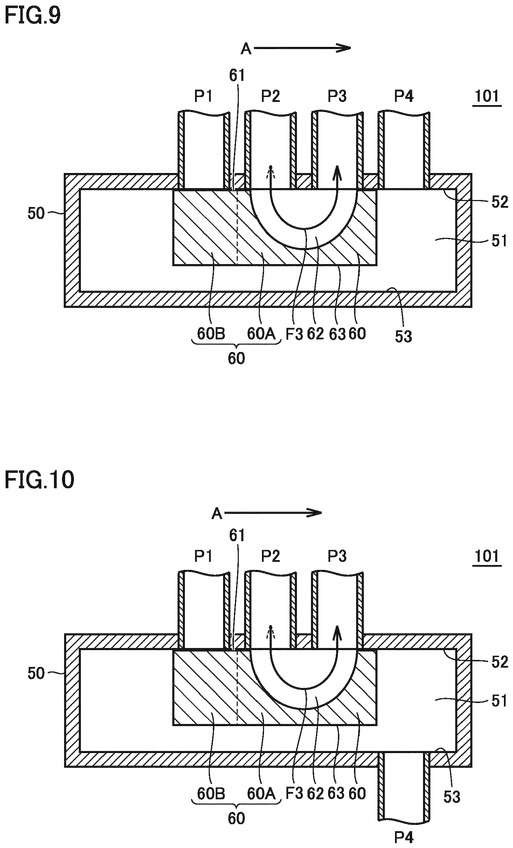

As illustrated in Figs. 8 and 9, the first surface 52 of the valve seat 50 is disposed to extend toward the first side in the first direction A further than the first opening P1. The second surface 61 of the valve body 60 is disposed to extend toward the first side in the first direction A further than the recess 62. The area of a partial region of the first surface 52 located closer to the first side than the first opening P1 in the first direction A is equal to or larger than the opening area of the first opening P1. The area of a partial region of the second surface 61 located closer to the first side than the recess 62 in the first direction A is equal to or larger than the opening area of the first opening P1.

As illustrated in Fig. 8, in the first state, the second surface 61 of the valve body 60 located closer to the first side than the recess 62 is in contact with the first surface 52 of the valve seat 50 located closer to the first side than the first opening P1. At this time, the recess 62 is disposed to face the first opening P1 and the second opening P2.

When the valve body 60 is located at the first position, the end of the valve body 60 on the first side is located closer to the first side than the end of the first opening P1 on the first side, and the end of the valve body 60 on the second side is located between the end of the second opening P2 on the second side and the end of the third opening P3 on the first side. When the flow path switching valve 101 is being switched to the first state, the valve body 60 is held at the first position. Thus, in the first state, the first flow path F1 which connects the first opening P1 to the second opening P2 is formed in the recess 62, and the second flow path F2 which connects the third opening P3 to the fourth opening P4 is formed in the valve chamber 51 but outside the valve body 60.

As illustrated in Fig. 9, in the second state, the second surface 61 located closer to the first side than the recess 62 of the valve body 60 closes the first opening P1. At this time, the recess 62 is disposed to face the second opening P2 and the third opening P3. The fourth opening P4 is connected to a space formed in the valve chamber 51 but outside the valve body 60, and the space is partitioned from the first opening P1 by the valve body 60.

When the valve body 60 is located at the second position, the end of the valve body 60 on the first side is located closer to the first side than the end of the first opening P1 on the first side, and the end of the valve body 60 on the second side is located between the end of the third opening P3 on the second side and the end of the fourth opening P4 on the first side. When the flow path switching valve 101 is being switched to the second state, the valve body 60 is held at the second position. Thus, in the second state, only the third flow path F3 which connects the second opening P2 to the third opening P3 is formed in the recess 62. The space formed in the valve chamber 51 but outside the valve body 60 is connected to the fourth opening P4 only and is partitioned from the first opening P1. Thus, in the second state, no flow path is formed in the valve chamber 51 between the first opening P1 and the fourth opening P4, and thereby, the first opening P1 and the fourth opening P4 are shielded from each other.

From a different point of view, in the flow path switching valve 101, the valve body 60 includes a partition portion 60A having a second surface 61 and an opening of the recess 62, and a shield portion 60B formed integral with the partition portion 60A and having a second surface 61 located closer to the first side than the recess 62. The partition portion 60A and the shield portion 60B are arranged side by side in the first direction A. When the valve body 60 is located at the first position, the entire second surface 61 of the shield portion 60B contacts the first surface 52, and the shield portion 60B does not block the second flow path F2 which connects the third opening P3 to the fourth opening P4. When the valve body 60 is located at the second position, a part of the second surface 61 of the shield portion 60B blocks the first opening P1, and the other part of the second surface 61 around the part is in contact with the first surface 52. Thus, the shield portion 60B shields the first opening P1 from the fourth opening P4.

Since the flow path switching valve 101 has basically the same configuration as the flow path switching valve 100, the same effect as that of the flow path switching valve 100 may be achieved.

Further, in the flow path switching valve 101, as long as at least three openings are arranged side by side in the moving direction of the valve body 60, the arrangement of the other opening is not limited. For example, as illustrated in Fig. 10, one end of the fourth opening P4 may be disposed on the third surface 53 of the valve seat 50. The fourth opening P4 may be disposed at a position not overlapping the valve body 60 when it is located at the first position or the second position. The center line of the fourth opening P4 may be aligned with the center line of the third opening P3. The one end of the fourth opening P4 may be disposed to face one end of the first opening P1 or the second opening P2. When viewed from a direction perpendicular to the first direction A, the first opening P1, the second opening P2, the third opening P3, and the fourth opening P4 may be disposed in such a manner that an angle formed between the fourth opening P4 and the first opening P1, the second opening P2 and the third opening P3 is 0° or more and 180° or less.

The flow path switching valve 101 is required to include a holding member (not shown) so as to hold the first surface 52 of the valve seat 50 and the second surface 61 of the valve body 60 in contact with each other. The holding member may have any configuration, and for example, it may have the same configuration as the holding member that holds the valve body in a conventional four-way valve. The holding member may be provided to mechanically press the second surface 61 of the valve body 60 against the first surface 52 of the valve seat 50, or may be provided to impart a static pressure difference between the inside and the outside of the recess 62.

### Third Embodiment

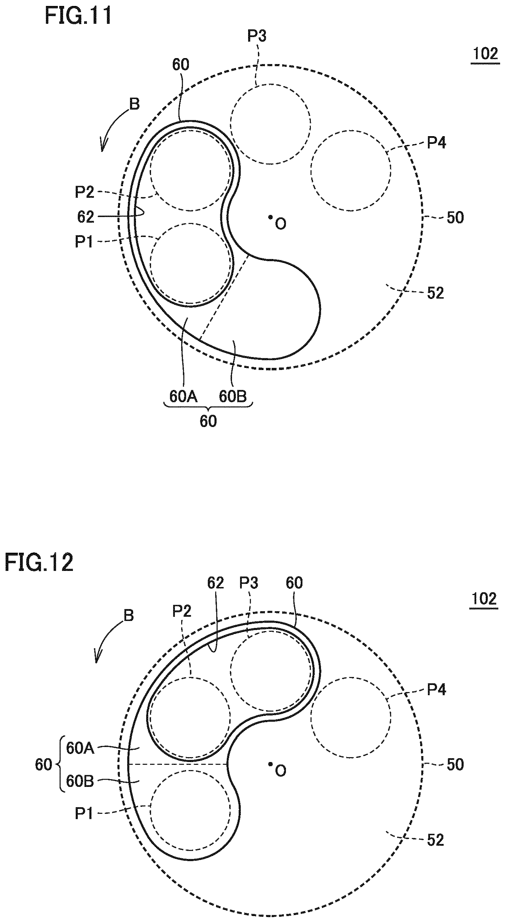

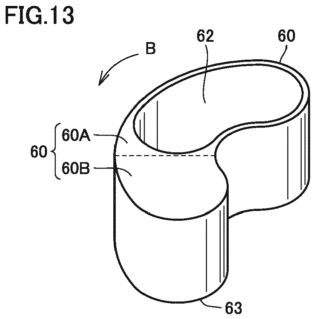

As illustrated in Figs. 11 and 12, the flow path switching valve 102 has basically the same configuration as the flow path switching valve 101 according to the second embodiment except that the first direction is not a linear direction but a circumferential direction around a point O when viewed from a direction perpendicular to the first surface 52 and the second surface 61. As illustrated in Figs. 11 to 13, the first direction is indicated by an arrow B. In Figs. 11 and 12, the valve seat 50 is indicated by a dotted line. When viewed from a direction perpendicular to the second surface 61, the point O is the center of a circle circumscribing the first opening P1, the second opening P2 and the third opening P3. For convenience of description, hereinafter, the side closer to the first opening P1 than the second opening P2 in the first direction B is referred to as a third side, and the side closer to the third opening P3 than the second opening P2 in the first direction B is referred to as a fourth side.

As illustrated in Figs. 11 and 12, the arrangement direction of one end of the first opening P1, one end of the second opening P2 and one end of the third opening P3 and the moving direction of the valve body 60 are identical to the first direction B. As illustrated in Figs. 11 to 13, the second surface 61 of the valve body 60 is disposed to extend toward the third side further than the recess 62 in the first direction B. The area of a partial region of the first surface 52 located between the first opening P1 and the third opening P3 in the first direction B is equal to or larger than the opening area of the first opening P1. The area of a partial region of the second surface 61 located closer to the third side than the recess 62 in the first direction B is equal to or larger than the opening area of the first opening P1.

As illustrated in Fig. 11, in the first state, the second surface 61 of the valve body 60 located closer to the third side than the recess 62 is in contact with the first surface 52 of the valve seat 50 located closer to the third side than the first opening P1. At this time, the recess 62 is disposed to face the first opening P1 and the second opening P2.

When the valve body 60 is located at the first position, the end of the valve body 60 on the third side is located closer to the third side than the end of the first opening P1 on the third side in the first direction B, and the end of the valve body 60 on the fourth side is located between the end of the second opening P2 on the second side and the end of the third opening P3 on the third side in the first direction B. When the flow path switching valve 102 is being switched to the first state, the valve body 60 is held at the first position. Thus, in the first state, the first flow path F1 which connects the first opening P1 to the second opening P2 is formed in the recess 62, and the second flow path F2 which connects the third opening P3 to the fourth opening P4 is formed in the valve chamber 51 but outside the valve body 60.

As illustrated in Fig. 12, in the second state, the second surface 61 located closer to the third side than the recess 62 of the valve body 60 closes the first opening P1. At this time, the recess 62 is disposed to face the second opening P2 and the third opening P3. The fourth opening P4 is connected to a space formed in the valve chamber 51 but outside the valve body 60, and the space is partitioned from the first opening P1 by the valve body 60.

When the valve body 60 is located at the second position, the end of the valve body 60 on the third side is located closer to the third side than the end of the first opening P1 on the third side in the first direction B, and the end of the valve body 60 on the fourth side is located between the end of the third opening P3 on the fourth side and the end of the fourth opening P4 on the third side in the first direction B. When the flow path switching valve 102 is being switched to the second state, the valve body 60 is held in the second position. Thus, in the second state, only the third flow path F3 which connects the second opening P2 to the third opening P3 is formed in the recess 62. The space formed in the valve chamber 51 but outside the valve body 60 is connected to the fourth opening P4 only and is partitioned from the first opening P1. Thus, in the second state, no flow path is formed in the valve chamber 51 between the first opening P1 and the fourth opening P4, and thereby, the first opening P1 and the fourth opening P4 are shielded from each other.

From a different point of view, in the flow path switching valve 102, the valve body 60 includes a partition portion 60A having a second surface 61 and an opening of the recess 62, and a shield portion 60B formed integral with the partition portion 60A and having a second surface 61 located closer to the first side than the recess 62. The partition portion 60A and the shield portion 60B are arranged side by side in the first direction B. When the valve body 60 is located at the first position, the entire second surface 61 of the shield portion 60B contacts the first surface 52, and the shield portion 60B does not block the second flow path F2 which connects the third opening P3 to the fourth opening P4. When the valve body 60 is located at the second position, a part of the second surface 61 of the shield portion 60B blocks the first opening P1, and the other part of the second surface 61 around the part is in contact with the first surface 52. Thus, the shield portion 60B shields the first opening P1 from the fourth opening P4.

The valve body 60 may be moved in the first direction B by a driving unit (not shown). The driving unit may have, for example, a rotation shaft that rotates about the point O in the first direction B, and the valve body 60 may be fixed to the rotation shaft.

Since the flow path switching valve 102 has basically the same configuration as the flow path switching valve 101, the same effect as that of the flow path switching valve 101 may be achieved.

The flow path switching valve 102 may have the same configuration as the flow path switching valve 100. The fourth opening P4 may be provided on the third surface 53 so as to be closed by the fourth surface 63 of the valve body 60 in the second state. The path switching valve 102 may achieve the same effect as that of the flow path switching valve 100.

In the flow path switching valves 100, 101 and 102, the valve body 60 may be provided to be in contact with the first surface 52 of the valve seat 50 at least in the first state and the second state. The flow path switching valves 100, 101 and 102 may be provided such that the second surface 61 of the valve body 60 does not slide on the first surface 52 of the valve seat 50.

The flow path switching valves 100, 101 and 102 may be provided so as to be switched between a first state where the number of flow paths is two or more and a second state where the number of flow paths is less than that of the first state. For example, the flow path switching valves 100, 101 and 102 may be provided so as to be switched between a first state where the number of flow paths is three or more and a second state where the number of flow paths is less than that of the first state.

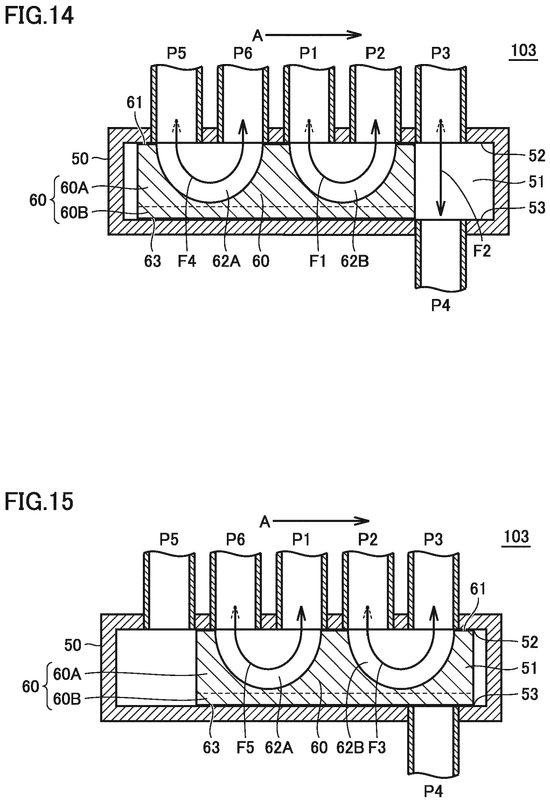

Figs. 14 and 15 illustrate a flow path switching valve 103 which is a modification of the flow path switching valve 100. The flow path switching valve 103 is provided in such a manner that it may be switched between a first state where a first flow path F1 is formed between a first opening P1 and a second opening P2, a second flow path F2 is formed between a third opening P3 and a fourth opening P4, and a fourth flow path F4 is formed between a fifth opening P5 and a sixth opening P6, and a second state where a third flow path F3 is formed between the second opening P2 and the third opening P3 and a fifth flow path F5 is formed between the sixth opening P6 and the first opening P1.

The valve seat 50 has, for example, six openings. The fifth opening P5, the sixth opening P6, the first opening P1, the second opening P2, and the third opening P3 are disposed in order in the first direction A. One end of the fifth opening P5, one end of the sixth opening P6, one end of the first opening P1, one end of the second opening P2 and one end of the third opening P3 are formed on the first surface 52 of the valve seat 50. The fifth opening P5 and the sixth opening P6 are arranged closer to the first side than, for example, the first opening P1, the second opening P2, the third opening P3 and the fourth opening P4.

The valve body 60 includes a first recess 62A in which the fourth flow path F4 is formed in the first state and the fifth flow path F5 is formed in the second state, and a second recess 62B in which the first flow path F1 is formed in the first state and the third flow path F3 is formed in the second state. The first recess 62A and the second recess 62B are arranged side by side in the first direction A.

The flow path switching valve 103 may switch a plurality of flow paths between the first state and the second state, and may reduce the number of flow paths in the second state than the number of flow paths in the first state without using a stop valve. The flow path switching valves 101 and 102 may have the same configuration as the flow path switching valve 103.

Although the embodiments of the present invention have been described above, the embodiments described above may be modified in various ways. The scope of the present invention is not limited to the embodiments described above. The scope of the present invention is defined by the claims, and is intended to include any modifications within the scope and meaning equivalent to the claims.

### REFERENCE SIGNS LIST

1: compressor; 2: four-way valve; 3: outdoor heat exchanger; 4: expander; 5: first indoor heat exchanger; 6: second indoor heat exchanger; 10: air conditioner; 11, 12, 13, 14, 15, 16: inlet/outlet pipe; 50: valve seat; 51: valve chamber; 52: first surface; 53: third surface; 60: valve body; 60A: partition portion; 60B: shield portion; 61: second surface; 62: recess; 63: fourth face; 100, 101, 102: flow path switching valve; P1: first opening; P2: second opening; P3: third opening; P4: fourth opening; P5: fifth opening; P6: sixth opening; P11: first port; P12: second port; P13: third port; P14: fourth port.

## Claims

1. A flow path switching valve comprising:
a valve seat which is provided with a valve chamber, and a first opening, a second opening, a third opening and a fourth opening, each of which is in communication with the valve chamber; and
a valve body which is provided so as to be movable between a first position and a second position in the valve chamber,
in a first state where the valve body is located at the first position, a first flow path which connects the first opening to the second opening, and a second flow path which connects the third opening to the fourth opening and is partitioned from the first flow path being formed in the valve chamber, and
in a second state where the valve body is located at the second position, a third flow path which connects the second opening to the third opening and is partitioned from the first opening and the fourth opening being formed in the valve chamber, and the first opening and the fourth opening being shielded from each other.

2. The flow path switching valve according to claim 1, wherein
when the valve body is located at the first position, the valve body partitions the first flow path from the second flow path, and
when the valve body is located at the second position, the valve body closes at least one of the first opening and the fourth opening, and partitions the third flow path from the first opening and the fourth opening.

3. The flow path switching valve according to claim 1 or 2, wherein
the valve seat has a first surface which faces the valve chamber and is formed with one end of the first opening, one end of the second opening and one end of the third opening,
the valve body has a second surface which is slidable against the first surface and a recess that is recessed from the second surface,
when the valve body is located at the first position, the first flow path is formed in the recess, and
when the valve body is located at the second position, the third flow path is formed in the recess, and the first opening is closed by the second surface.

4. The flow path switching valve according to claim 3, wherein
the first opening, the second opening and the third opening are disposed in order in a first direction, and
the second surface is disposed to extend in the first direction further than the recess.

5. The flow path switching valve according to claim 3, wherein
the valve chamber further includes a third surface which faces the first surface and is formed with one end of the fourth opening,
the valve body further includes a fourth surface which is slidable against the third surface,
when the valve body is located at the first position, the first flow path is formed in the recess, and
when the valve body is located at the second position, the third flow path is formed in the recess, and the fourth opening is closed by the fourth surface.

6. The flow path switching valve according to claim 5, wherein
the fourth opening is disposed to face the third opening, and
a center line of the fourth opening is aligned with a center line of the third opening.

7. An air conditioner comprising:
a refrigerant circuit,
the refrigerant circuit including:
a flow path switching valve according to any one of claims 1 to 6;
a first heat exchanger;
a second heat exchanger;
a first inlet/outlet pipe which is connected to one end of the first heat exchanger;
a second inlet/outlet pipe which connects the first inlet/outlet pipe to the fourth opening of the flow path switching valve;
a third inlet/outlet pipe which connects the other end of the first heat exchanger to the second opening of the flow path switching valve;
a fourth inlet/outlet pipe which connects the third opening of the flow path switching valve to one end of the second heat exchanger;
a fifth inlet/outlet pipe which is connected to the other end of the second heat exchanger; and
a sixth inlet/outlet pipe which connects the fifth inlet/outlet pipe to the first opening of the flow path switching valve,
when the valve body is located at the first position, the first heat exchanger and the second heat exchanger being connected in parallel, and
when the valve body is located at the second position, the first heat exchanger and the second heat exchanger being connected in parallel.

8. The air conditioner according to claim 7, wherein
when the first heat exchanger and the second heat exchanger work as an evaporator, the valve body of the flow path switching valve is located at the first position, and
when the first heat exchanger and the second heat exchanger work as a condenser, the valve body of the flow path switching valve is located at the second position.
